# EUROPEAN PATENT SPECIFICATION

(11) **EP 3 626 850 B1**
(45) Date of publication and mention of the grant of the patent: **02.11.2022**
(21) Application number: 19199025.8
(22) Date of filing: 23.09.2019
(51) Int. Cl.: C23C 4/073, C23C 4/12, C23C 4/18, C23C 28/00

(54) **BOND COAT FOR SPALLATION RESISTANT CERAMIC COATING**
ANBINDUNGSSCHICHT FÜR SPALLATIONSBESTÄNDIGE KERAMIKBESCHICHTUNG
COUCHE DE COLLAGE POUR REVÊTEMENT CÉRAMIQUE RÉSISTANT AUX SPALLATIONS

(30) Priority: 21.09.2018 US 201862734507 P; 10.12.2018 US 201816214533
(43) Date of publication of application: 25.03.2020
(73) Proprietor: Raytheon Technologies Corporation, Farmington, CT 06032 (US)
(72) Inventor: STROCK, Christopher W., Kennebunk, ME Maine 04043 (US); SEYMOUR, Kevin, Marlborough, CT Connecticut 06447 (US); WUSATOWSKA-SARNEK, Agnieszka M., Manchester, CT Connecticut 06042 (US); BURLATSKY, Sergei F., West Hartford, CT Connecticut 06117 (US)
(74) Representative: Dehns

(56) References cited:
- US-A- 4 336 276
- US-A1- 2003 054 196
- US-A1- 2008 050 236
- US-A1- 2017 314 410
- Oerlikon Metco: "Thermal Spray Materials Guide", , 30 April 2015 (2015-04-30), XP055536591, Retrieved from the Internet: URL:https://sites.ualberta.ca/~andre2/andr e/documents/researchResource/ThermalSprayM aterialsGuide.pdf [retrieved on 2018-12-19]

## Description

### BACKGROUND

The disclosure relates to ceramic coatings and, more particularly, to a bond coat for improving spallation resistance of ceramic coatings.

Ceramic coatings are often used for thermal barrier, wear resistant and abrasive applications. Such coatings are frequently applied using thermal spray methods. The resulting coating can be vulnerable to premature spallation due to residual coating stress, CTE mismatch, mechanical strains and the like.

A particular useful application of such ceramic coatings is in connection with creating an abrasive surface on compressor rotor external diameter (OD) surfaces that mate to cantilevered vanes to make a flow path inner air seal. In such applications, the abrasive coating can suffer from premature spallation due to residual coating stress, CTE mismatch and mechanical strains.

It would be highly desirable to apply such ceramic coatings in a way which reduces the occurrence of premature spallation.

US 2003/054196 A1 discloses a prior art ceramic coated substrate as set forth in the preamble of claim 1.

US 2008/050236 A1 discloses a prior art thermally sprayed conformal seal.

US 2017/314410 A1 discloses a prior art outer air seal abradable rub strip.

US 4 336 276 A discloses a prior art fully plasma-sprayed compliant backed ceramic turbine seal.

XP055536591 discloses prior art thermal sprays for coating substrates.

### SUMMARY

From one aspect, there is provided a method for coating a rotor shaft of a gas turbine engine with a ceramic coating as recited in claim 1.

From another aspect, there is provided a ceramic coated rotor shaft of a gas turbine engine as recited in claim 8.

Features of embodiments of the invention are set forth in the dependent claims.

Other details of the coating and coating method are set forth in the following detailed description and the accompanying drawings wherein like reference numerals depict like elements.

### BRIEF DESCRIPTION OF THE DRAWINGS

FIG. 1 illustrates a simplified cross-sectional view of a gas turbine engine;
FIG. 2 illustrates a simplified cross-sectional view of a rotor shaft inside a casing illustrating the relationship of the rotor and cantilevered vanes taken along the line 2-2 of FIG. 1;
FIG. 3 is a cross-sectional view taken along the line 3-3 of FIG. 2;
FIG. 4 is a cross-sectional view illustrating a nonlimiting example of a coating as disclosed herein; and
FIG. 5 is a cross-sectional view through an exemplary bond coat as disclosed herein.

### DETAILED DESCRIPTION

The disclosure relates to ceramic coatings and, more particularly, to improvement of spallation resistance of a ceramic coating through use of a bond coat or layer having a low elastic modulus which can be produced by forming a relatively high porosity in the bond coat or by including modulus reducing additives in the bond coat, such that the bond coat dissipates stress and strain from a radial crack through the ceramic coating and, thereby, can prevent such a crack from either damaging the underlying part or substrate, or leading to spallation and/or delamination of the ceramic coating.

As used herein, the elastic modulus of a bond coat is measured as compared to the modulus of a fully dense layer of the same bond coat material, applied conventionally in a spray without any steps being taken to increase porosity or reduce modulus. A bond coat is considered to have a low elastic modulus if it has a lower elastic modulus as compared to a fully dense layer of the same material, and more preferably if the property is less than or equal to 33% of the property of the fully dense material.

One non-limiting example of a particular area of application of this coating is in the formation of an abrasive coating on components of a gas turbine engine, and specifically on appropriate surfaces of engine components, for example turbofan components, and the following non-limiting disclosure is drawn to such an environment.

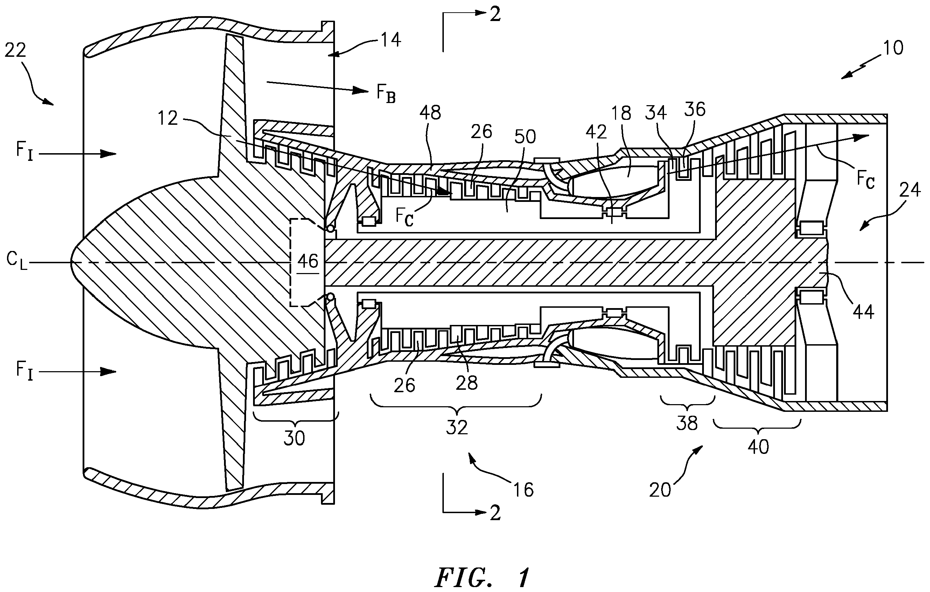

FIG. 1 is a cross sectional view of a gas turbine engine 10, in a turbofan embodiment. As shown in FIG. 1, turbine engine 10 comprises fan 12 positioned in duct 14, with duct 14 oriented about a turbine core comprising compressor section 16, combustor or combustors 18, and turbine section 20, arranged in flow series with upstream inlet 22 and downstream exhaust 24.

Compressor section 16 may comprise stages of compressor vanes 26 and blades 28 arranged in low pressure compressor section 30 and high pressure compressor section 32. Turbine section 20 may comprise stages of turbine vanes 34 and turbine blades 36 arranged in high pressure turbine section 38 and low pressure turbine section 40. The high pressure turbine section 38 may be coupled to the high pressure compressor section 32 via a first shaft 42, thereby forming a high pressure spool or high spool. The low pressure turbine section 40 may be coupled to the low pressure compressor section 30 and fan 12 via a second shaft 44, forming a low pressure spool or low spool. The shafts 42 and 44 may be coaxially mounted, with the high and low spools independently rotating about turbine axis (centerline) CL.

Fan 12 comprises a number of fan airfoils circumferentially arranged around a fan disk or other rotating member, which is coupled directly or indirectly to the low pressure compressor section 30 and driven by shaft 44. In some embodiments, the fan 12 may be coupled to the fan spool via a geared fan drive mechanism 46, providing fan speed control as a ratio to the core speed.

As shown in FIG. 1, fan 12 is forward-mounted and provides thrust by accelerating flow downstream through bypass duct 14. Alternatively, fan 12 may be an un-ducted fan or propeller assembly, in either a forward or aft-mounted configuration. In these various embodiments, turbine engine 10 may comprise any of a high-bypass turbofan, a low-bypass turbofan or a turboprop engine, and the number of spools and the shaft configurations may vary. Also contemplated for use with the coating system described herein are marine and land based turbines that may or may not have a fan or propeller.

In operation of turbine engine 10, incoming airflow F1 enters inlet 22 and divides into core flow FC and bypass flow FB, downstream of fan 12. Core flow FC propagates along the core flow path through compressor section 16, combustor 18 and turbine section 20, and bypass flow FB propagates along the bypass flow path through bypass duct 14.

Low pressure compressor section 30 and high pressure compressor section 32 are utilized to compress incoming air for combustor 18, where fuel is introduced, mixed with air and ignited to produce hot combustion gas. Depending on a particular embodiment, fan 12 may also provide some degree of compression or pre-compression to core flow FC and low pressure compressor section 30 may be omitted. Alternatively, an additional intermediate spool may be included, for example, in a three-spool turboprop or turbofan configuration.

Combustion gas exits combustor 18 and enters high pressure turbine section 38, encountering turbine vanes 34 and turbine blades 36. Turbine vanes 34 turn and accelerate the flow, and drive high pressure compressor section 32. Partially expanded combustion gas transitions from high pressure turbine section 38 to low pressure turbine section 40, driving low pressure compressor section 30 and fan 12 via shaft 44. Exhaust flow exits low pressure turbine section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

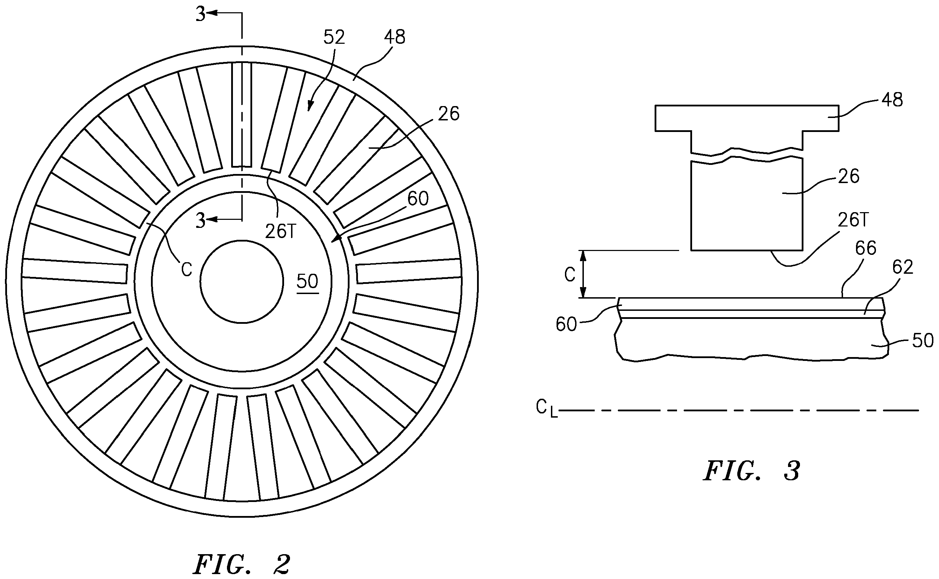

FIG. 2 is a cross section along line 2-2 of FIG. 1, and shows a casing 48 which has a rotor shaft 50 inside. Vanes 26 are attached to casing 48 and the gas path 52 is shown as the space between vanes 26. Abrasive coating 60, corresponding to the abrasive coating described hereinafter, is formed on rotor shaft 50 such that the clearance C between abrasive coating 60 and vane tips 26T has the proper tolerance for operation of the engine, e.g. to serve as a seal to prevent leakage of air, while not interfering with relative movement of the vanes and rotor shaft. In FIGS. 2 and 3, clearance C is expanded for purposes of illustration. In practice, clearance C may be, for example, in a range of about 0.025 inches to 0.055 inches (0.635 mm to 1.397 mm) when the engine is cold, and 0.000 to 0.03 inches (0.000 to 0.762 mm) during engine operation, depending on the specific operation conditions and previous rub events that may have occurred.

FIG. 3 shows a cross section along line 3-3 of FIG. 2, with casing 48 and vane 26. An abrasive coating 60 is attached to rotor shaft 50, with a clearance C between coating 60 and vane tip 26T of vane 26 that varies with operating conditions, as described herein. Abrasive coating 60 is a ceramic coating, for example aluminum oxide, which can be made spallation resistant by applying a low relative modulus bond coat 62 under coating 60, which in this case is an abrasive layer. Alternatively, another non-limiting embodiment of the ceramic coating can comprise a ceramic material selected from the group consisting of alumina, titania, chromia, zirconia, mullite and combinations thereof.

FIG. 3 shows an embodiment which includes a metallic bond coat 62 and an abrasive coating 60. Metallic bond coat 62 may be applied to the rotor shaft 50. Abrasive coating 60 is deposited on top of bond coat 62 and is the layer which first encounters vane tip 26T, at surface 66.

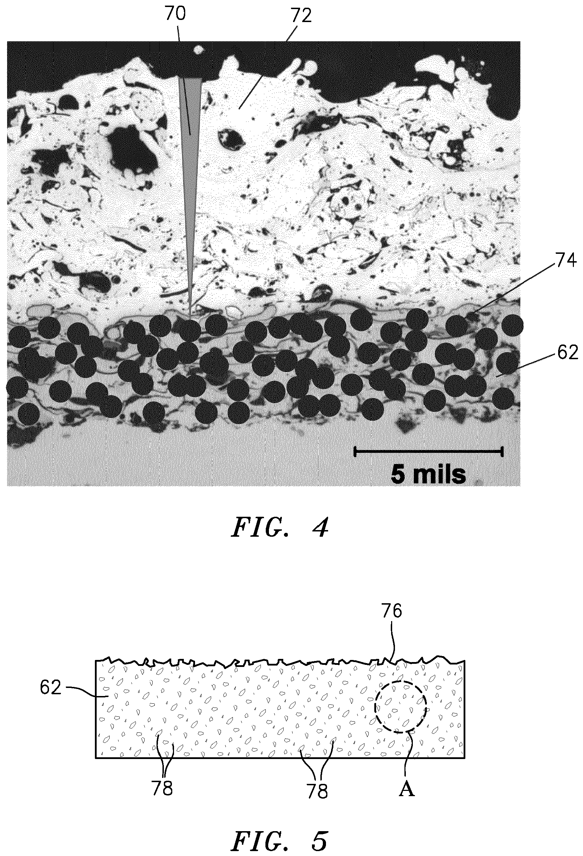

As set forth above, when abrasive coating 60 is applied as a ceramic, such as aluminum oxide, for example, residual coating stresses, stress due to CTE mismatch, and other mechanical stress and strain can lead to cracks in the ceramic coating, which can typically form radially, that is, directed along the radius of the coating on a cylindrical or curved surface, or stated differently, from a surface of the ceramic coating substantially transverse to the coating and toward an underlying substrate. Such a crack 70 is shown in FIG. 4.

As disclosed herein, however, bond coat 62 is configured to have elastic/plastic properties such that, when the tip of crack 70 reaches bond coat 62, the stress and strain from the tip of the crack is dissipated and/or absorbed by bond coat 62, thereby preventing turning of the crack which could lead to delamination or spallation of the ceramic coating. Stress concentration at the crack tip can also cause initiation of cracking into the base metal. The low modulus, elastic/plastic properties of the bond coat, particularly as compared to a conventionally applied bond coat, dissipate this stress and prevent propagation into the base metal. This reduction in stress also helps keep the stresses below the point required for lateral propagation.

One non-limiting configuration disclosed herein is a bond coat formed of a matrix of metal, for example MCrAl as discussed below, wherein the matrix has a porosity of 25-75 v%, wherein the porosity can be true porosity or can be partially or completely filled with low modulus/low strength filler or additive. In a non-limiting further embodiment, the porosity can be between 30 and 65 v%, preferably between 35 and 50 v%.

The bond coat can be applied having different thickness depending upon, among other things, the conditions to which the coating system will be exposed. In many typical conditions, where the bond coat is applied having porosity in the range of 25-75 v%, the bond coat can have a thickness of between 25 and 635 micrometers (µm), preferably between 75 and 305 micrometers and more preferably between 100 and 205 micrometers.

In some circumstances, for example under oxidation limited conditions, relatively thin layers are desirable, for example in the range of 50 to 125 micrometers.

It should be noted that a bond coat with high porosity might not be ideal for thermal barrier coat applications where thermally grown oxide (TGO) growth is critical. Rather, these bond coats with 20 - 75 v% metal matrix phase are best suited to cooler applications such as the bond coat for HPC rotor spacer arms, as one non-limiting example. To make these high porosity or filler content bond coats more suitable for oxidation limited applications, they should be applied in relatively thin layers, in the range of between 50 and 125 micrometers thickness, in a more dense bond coat layer. The more dense bond coat layer acts as reservoir of protective oxide formers such as aluminum and chrome. The oxide former elements diffuse at operating temperature from underlying bond coat layer material to oxidizing surfaces of the porous layer. Generally, however, the bond coat may be a minimum of 25 micro meters thick with exemplary thickness of between 100 and 250 micro meters.

FIG. 4 shows crack 70 extending through a ceramic layer 72, in this case an abrasive layer. When crack 70 reaches bond coat 62, however, the crack tip is blunted, and stress concentration is reduced, by strain being absorbed by bond coat 62.

This configuration can be utilized in order to reduce spallation for any type of ceramic coating. In the present example, disclosure is made in terms of aluminum oxide used to form an abrasive layer, but numerous other types of ceramic coatings can benefit from the disclosed bond layer, including ceramic wear resistant coatings, thermal barriers and the like.

Bond coat 62 as disclosed herein is formed of a bond coat material, but is applied in such a way that the bond coat has a lower elastic modulus as compared to the same material conventionally, thereby providing the desired properties of the bond coat. This lower modulus can be provided by forming the bond coat such that it has added porosity or modulus reducing additives mixed into or distributed through the bond coat. These aspects of the bond coat provide the desired elasticity or plasticity such that the bond coat reduces spallation of the ceramic coating by blunting or reducing the stress caused by cracks in the ceramic layer.

In one exemplary embodiment, bond coat 62 is an MCrAl metal or alloy, where M is nickel, cobalt, iron, copper or mixtures thereof. Optionally yttrium, silicon and other minor alloying elements may be employed to tailor the properties of the alloy to the needs of the specific application. Bond coat 62 is applied in such a way that it has a certain level of porosity, which serves to dissipate stresses at the tip of a crack in the ceramic layer, all as set forth above.

One measure of suitable properties of the bond coat is modulus, and the bond coat can desirably be produced having a modulus which is lower than that of the bond coat material or a layer or coating formed as a simple coating of such material. For quantification of the reduced modulus described here, the correlated quantities of metal volume fraction or porosity plus filler fraction can be used. These alternate measures are used due to ease of quantification by area fraction in metallographic cross section and/or coating density.

Porosity of the bond coat layer is somewhat inherent to the materials from which the layer is produced. However, in this aspect of the disclosure the base porosity is increased for example by adding a fugitive material to the alloy, and then removing that fugitive material from the bond coat. For example, the bond coat material can be mixed with a fugitive material which is then removed after application of the bond coat, and in this way the porosity of the bond coat can be between 25 and 75 v%, more particularly between 50 and 70 v%, which is significantly higher than porosity of a bond coat formed from a simple layer of MCrAl, which would be less than 25 v%.

Porosity can also be created in the bond coat by mixing in low modulus materials which are not necessarily fugitive materials. In this context the term porosity is being used to describe the use of any low modulus or low strength filler material which may include air as with conventional porosity, polymers, and low modulus or low strength fillers. The low modulus of these materials leads to desired properties in the bond coat. One example of such a bond coat is one where the bond coat material is mixed with hexagonal boron nitride (hBN)agglomerates (74, FIG. 4). This material remains in place in the bond coat and creates a lower modulus as desired.

As used herein, the term "low" is defined as being <=33% of the property of the fully dense alloy that makes up the coating. Thus, a low modulus bond coat could be considered to have a low modulus if the modulus is less than or equal to 33% of the modulus of a fully dense layer of the same material.

Further reduction in effective elastic (Young's) modulus or yield strength is provided by the structural contributions of the composite such as low adhesion between the filler and metal matrix or porosity that is associated with the filler materials. (i.e. filler particles that are themselves composites or assemblies of sub-particles and are not fully dense) .

Application of a bond coat having desired porosity and/or modulus can allow application of thicker ceramic layers without risk of spallation.

FIG. 5 is an enlarged cross section through a portion of a bond coat 62 and further illustrates what is meant by porosity of bond coat 62 as referred to herein. Bond coat 62 has porosity as reflected by pores of various size and shape scattered through bond coat 62. It should be noted that bond coat 62 when applied may have a surface 76 which is rough or uneven. This is in contrast to the internal porosity of bond coat 62 which is the focus of this disclosure, for example in the portion of FIG. 5 marked at A. To the extent that the surface roughness of surface 76 of bond coat 62 might have undulating topography, this structure is nevertheless not the internal porosity referred to herein. Such internal porosity helps to provide the decreased modulus as also referred to herein, and surface roughness would have little or no impact upon this aspect of bond coat 62. Further, it should be noted that the internal porosity of bond coat 62 is shown in FIG. 5 as a distributed series of pores 78. Pores 78 can be void space within bond coat 62, for example as gaps left between coating matrix particles during deposition or left behind by fugitive additives that have been removed. Alternatively, pores 78 could in fact be void space filled with a filler material such as the modulus reducing additives referred to herein.

The coating system as disclosed herein can be applied to a substrate in a number of ways. However, spray deposition is particularly well suited to application of the layers as disclosed herein, as is application through a sintered powder method. In accordance with one embodiment, a substrate to be coated can first be cleaned to remove contaminants that would otherwise interfere with good bonding.

Next, the bond coat is applied. As mentioned above, the bond coat can be adjusted in a number of different ways to produce the desired relatively low modulus and/or high porosity.

As mentioned above, one way to produce the desired reduction in modulus of the bond coat is to utilize materials which will have, or can be modified to have a greater porosity than a bond coat or layer formed as a simple fully dense coating of bond coat material.

In this configuration, the bond coat can be made to have a much higher porosity, between 25 and 75 v%, and more particularly between 50 and 70 v%. This higher level of porosity can be obtained by forming a mixture of the bond coat material with a fugitive material, and then removing the fugitive material to produce the desired porosity.

As a further non-limiting configuration, the bond coat material can be mixed with a low modulus material and the mixture can be applied such that the low modulus material remains distributed through the bond coat. The low modulus material helps to provide the overall bond coat with the desired low relative modulus. The low modulus material is, for example, hexagonal boron nitride (hBN). Another suitable low modulus material is polyester and/or lucite, which can be left in the coating for low temperature applications or can be pyrolysed to leave porosity.

In one specific example, conventional bond coat materials can be mixed with a fugitive material, for example a polymer such as polyester or Lucite, and the fugitive material removed after coating. After application, removal of the fugitive material, for example through application of heat, results in a porosity of between 25 and 75 v%, depending upon how much fugitive material is utilized, and this high level of porosity serves to absorb stress from the crack tip of a crack in an overlying ceramic layer as desired.

In an alternate embodiment the bond layer is formed on a substrate by sintering of a powder blend. A slurry of metallic bond coat particles mixed with fugitive polyester is applied by spraying, dipping, brushing or the like. The particles adhere to the part due to binder content of the slurry that remains when dried. After drying the part and green slurry coating is sintered under vacuum to establish metallurgical bonding between the metal particles and the part.

There has been provided a ceramic coated rotor shaft and method for coating the same, which helps to prevent spallation of a ceramic coating, and to allow application of such coatings to greater thicknesses.

## Claims

1. A method for coating a rotor shaft (50) of a gas turbine engine with a ceramic coating (60; 72), comprising the steps of:
applying a bond coat material to a surface of a rotor shaft (50) to form a bond coat (62) on the surface; and
applying a ceramic coat (60; 72) comprising an abrasive coat (60; 72) over the bond coat (62), wherein the step of applying the bond coat material:
produces a bond coat (62) having increased porosity and a lower elastic modulus as compared to a fully dense layer of the same bond coat material, applied in a spray without any steps being taken to increase porosity or reduce modulus; and
comprises either:
applying the bond coat material mixed with a fugitive material, and removing the fugitive material to produce porosity; or
applying the bond coat material mixed with a modulus reducing additive (74) to produce porosity at least partially filled with the additive, wherein the modulus reducing additive (74) is hexagonal boron nitride (hBN), polyester or lucite,
wherein the abrasive coat (60; 72) is configured to be the layer which first encounters a vane tip (26T) of a vane (26) when the rotor shaft (50) is in use.

2. The method of any preceding claim, wherein the bond coat material comprises a metal or alloy of MCrAl, wherein M is nickel, cobalt, iron, copper or mixtures thereof.

3. The method of any preceding claim, wherein the ceramic coat (60; 72) comprises an aluminum oxide coat.

4. The method of any preceding claim, wherein the ceramic coat (60; 72) comprises a ceramic material selected from the group consisting of alumina, titania, chromia, zirconia, mullite and combinations thereof.

5. The method of any preceding claim, wherein the bond coat (62) has a porosity of between 25 and 75 v%.

6. The method of any preceding claim, wherein the bond coat (62) has a thickness of between 25 and 635 micro meters.

7. The method of any preceding claim, wherein the bond coat (62) has a thickness of between 50 and 125 micrometers.

8. A ceramic coated rotor shaft of a gas turbine engine, comprising:
a substrate (50);
a bond coat (62) on the substrate (50); and
a ceramic coat (60; 72) on the bond coat (62), wherein the bond coat (62) is formed of a bond coat material and has a lower elastic modulus than a fully dense layer of the same bond coat material applied in a spray without any steps being taken to increase porosity or reduce modulus,
**characterised in that**:
the ceramic coat (60;72) comprises an abrasive coat (60; 72) ;
the bond coat (62) has increased porosity as compared to the fully dense layer of the same bond coat material;
the bond coat (62) contains either:
at least one modulus reducing additive (74), and the modulus reducing additive (74) is hexagonal boron nitride (hBN), polyester or lucite; or
remaining porosity after removal of fugitive material; and
the ceramic coat (60; 72) is configured to be the layer which first encounters a vane tip (26T) of a vane (26) when the rotor shaft (50) is in use.

9. The ceramic coated substrate of claim 8, wherein the bond coat (62) has a porosity of between 25 and 75 v%.

10. The ceramic coated substrate of claim 8 or 9, wherein the bond coat (62) has a thickness of between 25 and 635 micrometers.

11. The ceramic coated substrate of any of claims 8 to 10, wherein the bond coat (62) has a thickness of between 50 and 125 micro meters.

## Patentansprüche

1. Verfahren zum Beschichten einer Rotorwelle (50) eines Gasturbinentriebwerks mit einer Keramikbeschichtung (60; 72), umfassend die folgenden Schritte:
Aufbringen eines Anbindungsschichtmaterials auf eine Oberfläche einer Rotorwelle (50), um eine Anbindungsschicht (62) auf der Oberfläche zu bilden; und
Aufbringen einer Keramikbeschichtung (60; 72) umfassend eine Schleifbeschichtung (60; 72) über der Anbindungsschicht (62), wobei der Schritt des Aufbringens des Anbindungsschichtmaterials:
eine Anbindungsschicht (62) mit erhöhter Porosität und einem niedrigeren Elastizitätsmodul im Vergleich zu einer vollständig dichten Schicht desselben Anbindungsschichtmaterials erzeugt, die im Sprühverfahren aufgebracht wird, ohne dass irgendwelche Schritte zur Erhöhung der Porosität oder zur Verringerung des Moduls unternommen werden; und
entweder umfasst:
Aufbringen des mit einem flüchtigen Material vermischten Anbindungsschichtmaterials und Entfernen des flüchtigen Materials, um Porosität zu erzeugen; oder
Aufbringen des Anbindungsschichtmaterials gemischt mit einem modulreduzierenden Additiv (74), um eine Porosität zu erzeugen, die zumindest teilweise mit dem Additiv gefüllt ist, wobei das modulreduzierende Additiv (74) hexagonales Bornitrid (hBN), Polyester oder Lucite ist,
wobei die Schleifbeschichtung (60; 72) so konfiguriert ist, dass sie die Schicht ist, die zuerst auf eine Flügelspitze (26T) eines Flügels (26) trifft, wenn die Rotorwelle (50) verwendet wird.

2. Verfahren nach einem der vorhergehenden Ansprüche, wobei das Anbindungsschichtmaterial ein Metall oder eine Legierung von MCrAl umfasst, wobei M Nickel, Kobalt, Eisen, Kupfer oder Mischungen davon ist.

3. Verfahren nach einem der vorhergehenden Ansprüche, wobei die Keramikbeschichtung (60; 72) aus einer Aluminiumoxidschicht besteht.

4. Verfahren nach einem der vorhergehenden Ansprüche, wobei die Keramikbeschichtung (60; 72) ein keramisches Material umfasst, das aus der Gruppe ausgewählt ist, die aus Aluminiumoxid, Titanoxid, Chromoxid, Zirkonoxid, Mullit und Kombinationen davon besteht.

5. Verfahren nach einem der vorhergehenden Ansprüche, wobei die Anbindungsschicht (62) eine Porosität zwischen 25 und 75 Vol.-% aufweist.

6. Verfahren nach einem der vorhergehenden Ansprüche, wobei die Anbindungsschicht (62) eine Dicke zwischen 25 und 635 Mikrometer aufweist.

7. Verfahren nach einem der vorhergehenden Ansprüche, wobei die Anbindungsschicht (62) eine Dicke zwischen 50 und 125 Mikrometer aufweist.

8. Keramikbeschichtete Rotorwelle eines Gasturbinentriebwerks, umfassend:
ein Substrat (50);
eine Anbindungsschicht (62) auf dem Substrat (50); und eine Keramikbeschichtung (60; 72) auf der Anbindungsschicht (62), wobei
die Anbindungsschicht (62) aus einem Anbindungsschichtmaterial gebildet wird und einen niedrigeren Elastizitätsmodul aufweist als eine vollständig dichte Schicht desselben Anbindungsschichtmaterials, die in einem Sprühverfahren aufgebracht wird, ohne dass irgendwelche Schritte zur Erhöhung der Porosität oder zur Verringerung des Moduls unternommen werden;,
**dadurch gekennzeichnet, dass**:
die Keramikbeschichtung(60; 72) eine Schleifbeschichtung(60; 72)umfasst;
die Anbindungsschicht (62) im Vergleich zu der vollständig dichten Schicht aus demselben Anbindungsschichtmaterial eine erhöhte Porosität aufweist;
die Anbindungsschicht (62) entweder enthält:
mindestens ein modulreduzierendes Additiv (74), und das modulreduzierende Additiv (74) hexagonales Bornitrid (hBN), Polyester oder Lucite ist; oder
verbleibende Porosität nach Entfernung von flüchtigem Material; und
die Keramikbeschichtung (60; 72) so konfiguriert ist, dass sie die Schicht ist, die zuerst auf eine Flügelspitze (26T) eines Flügels (26) trifft, wenn die Rotorwelle (50) verwendet wird.

9. Keramikbeschichtetes Substrat nach Anspruch 8, wobei die Anbindungsschicht(62) eine Porosität zwischen 25 und 75 Vol.-% aufweist.

10. Keramikbeschichtetes Substrat nach Anspruch 8 oder 9, wobei die Anbindungsschicht(62) eine Dicke zwischen 25 und 635 Mikrometer hat.

11. Keramikbeschichtetes Substrat nach einem der Ansprüche 8 bis 10, wobei die Anbindungsschichtung (62) eine Dicke zwischen 50 und 125 Mikrometer hat.

## Revendications

1. Procédé de revêtement d'un arbre de rotor (50) d'un moteur à turbine à gaz avec un revêtement céramique (60 ; 72), comprenant les étapes :
d'application d'un matériau de couche de collage sur une surface d'un arbre de rotor (50) pour former une couche de collage (62) sur la surface ; et
l'application d'un revêtement céramique (60 ; 72) comprenant un revêtement abrasif (60 ; 72) sur la couche de collage (62),
dans lequel l'étape d'application du matériau de couche de collage :
produit une couche de collage (62) ayant une porosité accrue et un module d'élasticité réduit par rapport à une couche entièrement dense du même matériau de couche de collage,
appliquée en pulvérisation sans qu'aucune mesure ne soit prise pour augmenter la porosité ou réduire le module ; et comprend soit :
l'application du matériau de couche de collage mélangé avec un matériau fugitif, et l'élimination du matériau fugitif pour produire une porosité ; soit
l'application du matériau de couche de collage mélangé avec un additif réduisant le module (74) pour produire une porosité au moins partiellement remplie avec l'additif, dans lequel l'additif réduisant le module (74) est du nitrure de bore hexagonal (hBN), du polyester ou de la lucite,
dans lequel le revêtement abrasif (60 ; 72) est conçu pour être la couche qui rencontre en premier une extrémité d'aube (26T) d'une aube (26) lorsque l'arbre de rotor (50) est utilisé.

2. Procédé selon une quelconque revendication précédente, dans lequel le matériau de couche de collage comprend un métal ou un alliage de MCrAl, dans lequel M est le nickel, le cobalt, le fer, le cuivre ou leurs mélanges.

3. Procédé selon une quelconque revendication précédente, dans lequel le revêtement céramique (60 ; 72) comprend une couche d'oxyde d'aluminium.

4. Procédé selon une quelconque revendication précédente, dans lequel le revêtement céramique (60 ; 72) comprend un matériau céramique choisi dans le groupe constitué de l'alumine, l'oxyde de titane, l'oxyde de chrome, la zircone, la mullite et leurs combinaisons.

5. Procédé selon une quelconque revendication précédente, dans lequel la couche de collage (62) a une porosité comprise entre 25 et 75 % en volume.

6. Procédé selon une quelconque revendication précédente, dans lequel la couche de collage (62) a une épaisseur comprise entre 25 et 635 microns.

7. Procédé selon une quelconque revendication précédente, dans lequel la couche de collage (62) a une épaisseur comprise entre 50 et 125 microns.

8. Arbre de rotor à revêtement céramique d'un moteur à turbine à gaz, comprenant :
un substrat (50) ;
une couche de collage (62) sur le substrat (50) ; et
un revêtement céramique (60 ; 72) sur la couche de collage (62), dans lequel
la couche de collage (62) est formée d'un matériau de couche de collage et a un module d'élasticité réduit par rapport à une couche entièrement dense du même matériau de couche de collage, appliquée en pulvérisation sans qu'aucune mesure ne soit prise pour augmenter la porosité ou réduire le module,
**caractérisé en ce que** :
le revêtement céramique (60 ; 72) comprend un revêtement abrasif (60 ; 72) ;
la couche de collage (62) a une porosité accrue par rapport à une couche entièrement dense du même matériau de couche de collage ;
la couche de collage (62) contient soit :
au moins un additif réduisant le module (74), et l'additif réduisant le module (74) est du nitrure de bore hexagonal (hBN), du polyester ou de la lucite ; soit
la porosité restante après le retrait d'un matériau fugitif ; et
le revêtement céramique (60 ; 72) est conçu pour être la couche qui rencontre en premier une extrémité d'aube (26T) d'une aube (26) lorsque l'arbre de rotor (50) est utilisé.

9. Substrat à revêtement céramique selon la revendication 8, dans lequel la couche de collage (62) a une porosité comprise entre 25 et 75 % en volume.

10. Substrat à revêtement céramique selon les revendications 8 ou 9, dans lequel la couche de collage (62) a une épaisseur comprise entre 25 et 635 microns.

11. Substrat à revêtement céramique selon l'une quelconque revendications 8 à 10, dans lequel la couche de collage (62) a une épaisseur comprise entre 50 et 125 microns.
